Europäisches Patentamt

(19) European Patent Office

Office européen des brevets

(11) Numéro de publication: **0 093 665**
**B1**

(12) **FASCICULE DE BREVET EUROPEEN**

(45) Date de publication du fascicule du brevet:
16.07.86

(51) Int. Cl.⁴: **A 23 J 1/20**

(21) Numéro de dépôt: **83400854.2**

(22) Date de dépôt: **28.04.83**

(54) Procédé de préparation de protéines lactosériques délipidées.

(30) Priorité: **29.04.82 FR 8207401**

(43) Date de publication de la demande:
**09.11.83 Bulletin 83/45**

(45) Mention de la délivrance du brevet:
**16.07.86 Bulletin 86/29**

(84) Etats contractants désignés:
**AT BE CH DE GB IT LI LU NL SE**

(56) Documents cités:
**EP - A - 0 038 732**
**FR - A - 1 469 793**

(73) Titulaire: **PILLET, Société dite:, 100 Avenue J.F. Kennedy, F-33700 Merignac (FR)**

(72) Inventeur: **Bolzer, René, La Croix Rouge, F-35530 Brece (FR)**

(74) Mandataire: **Flechner, Willy et al, CABINET FLECHNER 22, Avenue de Friedland, F-75008 Paris (FR)**

## Description

La présente invention se rapporte aux procédés de préparation de protéines lactosériques délipidées.

On prépare les protéines lactosériques, utiles notamment comme ingrédients d'aliments diététiques, en soumettant du lactosérum à une ultrafiltration. Il est souhaitable que l'ultrafiltrat contienne aussi peu de lipides que possible, en particulier quand on souhaite préparer des aliments enrichis en protéines. Pendant l'ultrafiltration, les lipides s'accumulent et font partie de ce qu'on appelle une membrane dynamique, qui abaisse les débits de perméation et rend ensuite le nettoyage des appareils plus difficile. Dans certains cas, il se produit aussi une augmentation néfaste de la viscosité et une baisse du pouvoir moussant et de la stabilité.

Toutes les solutions proposées jusqu'ici pour abaisser la teneur en lipides des protéines lactosériques, telles qu'une microfiltration, une déminéralisation suivie d'un traitement thermique, un chauffage à température élevée, sont onéreuses et peu efficaces.

Au EP-A-0038732, on décrit l'utilisation du lait décationisé pour la fabrication du lactosérum. On ne propose pas de préparer des protéines lactosériques délipidées. Le procédé prévu, consiste à mélanger le lait décationisé acidulé à une quantité de lait normal non traité, suffisante pour élever le pH du mélange entre 4,4 et 4,6 puis à coaguler et à récupérer éventuellement le lactosérum. On peut faire ensuite subir à celui-ci «toute opération technologique habituelle». Non seulement ce document antérieur est muet sur toute délipidation mais encore, il prévoit une gamme de pH dont la borne inférieure est supérieure à la limite supérieure fixée suivant l'invention et laisse aux spécialistes à déterminer, parmi toutes les opérations technologiques habituelles que peut subir le lactosérum, celle qui convient, sans lui donner quelque indication que se soit sur le but visé qui est la délipidation.

L'invention vise un procédé de préparation de protéines lactosériques délipidées simple à mettre en œuvre et à maîtriser et donc très fiable, qui n'entraîne pas de perte de matière par abaissement de rendement en protéines, qui n'implique pas des coûts supplémentaires importants de mise en œuvre et qui permet d'obtenir une augmentation du débit instantané d'ultrafiltration supérieure à 30% et un maintien du débit dans le temps se traduisant par des gains de temps et d'énergie de 30 à 100%.

Le procédé suivant l'invention est défini à la revendication 1.

On constate, en effet, d'une manière surprenante, que les protéines lactosériques ainsi obtenues sont délipidées.

Avantageusement, on abaisse le pH du lait acide ou du caséinate acide entre 1,8 et 2,4 à l'aide d'une résine cationique sous forme H.

La délipidation est d'autant plus poussée que le pH de coagulation est plus bas.

On peut préparer le caséinate acide décationé sur une résine cationique sous forme H par le procédé qui consiste à porter une quantité de liquide miscible à l'eau, servant de volant initial de pH, à un pH inférieur à 3,5 environ puis à ajouter à ce volant de pH une quantité de lait, en présence d'une masse de résine cationique, telle que le pH de l'ensemble des deux quantités réunies reste inférieur à 3,5.

On peut préparer les laits acides ou autres matières lactées décationisées par les procédés habituels.

Le mode opératoire préféré consiste, pour l'obtention du pH de coagulation minimum à relever le pH du caséinate acide ou du lait acide par un hydroxyde métallique, notamment par un hydroxyde de métal alcalin, tel que l'hydroxyde de sodium ou l'hydroxyde de potassium ou par l'ammoniaque. Mais on peut aussi utiliser du lait normal ayant un pH de 6,7 et mieux encore du lait dont le pH a été abaissé par exemple entre 5 et 5,6 à l'aide d'une résine cationique sous forme H ou à l'aide d'acide lactique, chlorhydrique, sulfurique ou autre.

On provoque la coagulation à la manière classique, par exemple en réchauffant le mélange (éventuellement par réchauffement de ses constituants avant leur réunion) entre 40 et 50°C et par une injection de vapeur d'eau.

On sépare le lactosérum du produit coagulé et l'on soumet le lactosérum à une ultrafiltration, par exemple à une température de 40 à 55°C.

### Exemple 1

On prépare un caséinate acide ayant un pH de 3,4. On le neutralise jusqu'à pH 4,6 par l'hydroxyde de sodium. On provoque la coagulation en réchauffant à 48°C et en injectant de la vapeur d'eau. On sépare le lactosérum du coagulum à la manière classique, on le pasteurise et on lui fait subir une ultrafiltration sur membrane entre 50 et 55°C.

L'installation d'ultrafiltration comprend 4 étages en série permettant de concentrer jusqu'à 40 fois les protéines du lactosérum en leur faisant subir dans les derniers étages une dialyse. Les paramètres moyens de fonctionnement (matériel S.F.E.C.) sont les suivants:

Vitesse de déplacement du liquide: 4 mètres/seconde.
Température entre 50–55°C.
Pression: entrée 6 bars
    sortie 3,5 bars.
Débit entrée: 6000 litres
    sortie: 160 litres.

Le rétentat d'ultrafiltration à la sortie contient 205 grammes de matière sèche par litre, 180 grammes de protéines par litre, 0,65 gramme de matière grasse par litre et 3,10 grammes de matières minérales par litre. Le rétentat séché a un pouvoir moussant excellent en donnant des émulsions très stables à la chaleur. Il a aussi un excellent pouvoir gélifiant.

Exemple comparatif 1

On reprend l'exemple 1, mais un ultrafiltrant du lactosérum obtenu par abaissement du pH d'un lait normal à la valeur diélectrique et séparation du caillé.

Le rétentat d'ultrafiltration contient 215 grammes de matière sèche par litre, 161 grammes de protéines par litre, 12,7 grammes de matière grasse par litre et 5,1 grammes de matières minérales.

Exemples 2 à 5

On reprend l'exemple 1, mais en utilisant du caséinate acide décationé, ayant un pH de 2,4, ramené aux pH de 4,67; 4,65; 4,52; 4,38 et 4,32 respectivement par du lait normal ayant un pH de 6,7.

Les protéines lactosériques présentent, à l'analyse, les compositions suivantes en lipides pour une opération d'ultrafiltration identique (facteur de concentration = 38):

4,67 = 0,92 gramme par litre
4,52 = 0,84 gramme par litre
4,38 = 0,61 gramme par litre
4,32 = 0,60 gramme par litre

La comparaison de l'exemple comparatif 1 (méthode traditionnelle) avec les autres cas 1 à 5 montre la valeur de la délipidation.

La comparaison des exemples 2 à 5 entre eux démontre l'intérêt d'abaisser le pH de coagulation pour bien délipider.

## Revendications

1. Procédé de préparation de protéines lactosériques délipidées par ultra-filtration de lactosérum, caractérisé en ce qu'il consiste à obtenir le lactosérum, soumis à l'ultra-filtration, en mélangeant du caséinate acide ou du lait acide ayant un pH inférieur à 3,5 et de préférence inférieur à 2,5 à du lait ou à un hydroxyde métallique jusqu'à obtention d'un mélange ayant un pH inférieur à 4,4, et en effectuant une coagulation à un pH inférieur à 4,4.

2. Procédé suivant la revendication 1, caractérisé en ce que le lait acide ou le caséinate acide a été décationé au moins en partie à l'aide d'une résine cationique sous forme H.

## Claims

1. Process for preparing delipidated lactoserum proteins by ultra-filtration of lactoserum, characterised in that it comprises obtaining the lactoserum, subjected to ultra-filtration, by mixing acid caseinate or acid milk having a pH below 3,5 and preferably below 2,5 with milk or a metal hydroxide until a mixture is obtained having a pH below 4,4, and effecting coagulation at a pH below 4,4.

2. Process as claimed in claim 1, characterised in that the acid milk or the acid caseinate has been at least partly decationised by means of a cationic resin in H form.

## Patentansprüche

1. Verfahren zur Herstellung von entfetteten Molkenproteinen durch Ultrafiltration der Molke, dadurch gekennzeichnet, dass man eine Molke zur Ultrafiltration herstellt, indem man Säurecaseinate oder Milchsäure mit einem pH-Wert von weniger als 3,5 und vorzugsweise von weniger als 2,5 mit Milch oder einem Metallhydroxyd vermischt, bis die Mischung einen pH-Wert von weniger als 4,4 aufweist und man eine Coagulation bei einem pH-Wert von weniger als 4,4 bewirkt.

2. Verfahren nach Anspruch 1, dadurch gekennzeichnet, dass man die Milchsäure oder das Säurecaseinat mindestens teilweise mittels eines Kation-Harzes in der pH-Form decationisiert.